# EUROPÄISCHE PATENTSCHRIFT

(11) **EP 2 552 133 B1**
(45) Veröffentlichungstag und Bekanntmachung des Hinweises auf die Patenterteilung: **28.02.2018**
(21) Anmeldenummer: 11006247.8
(22) Anmeldetag: 29.07.2011
(51) Int. Cl.: H04W 12/02, H04W 4/00, H04W 4/02, G08G 1/01

(54) **Datenschutz-gerechte Aufbereitung von Mobilfunkdaten für die Erzeugung von Verkehrsprognosen**
Processing of wireless data in accordance with data protection for the creation of traffic forecasts
Préparation orientée vers la protection des données radio mobiles pour la production de pronostics de trafic

(43) Veröffentlichungstag der Anmeldung: 30.01.2013
(73) Patentinhaber: Deutsche Telekom AG, 53113 Bonn (DE)
(72) Erfinder: Langer, Stefan, 50968 Köln (DE); Haffke, Viktor, 51061 Köln (DE); Schubert, Holm, 53844 Troisdorf (DE)
(74) Vertreter: Bucher, Ralf Christian

(56) Entgegenhaltungen:
- EP-A2- 1 501 321
- EP-A2- 2 242 031
- US-A1- 2005 227 696
- US-A1- 2010 285 772
- DANILO VALERIO: "Road Traffic information from Cellular Network Signaling", TECHNICAL REPORT FTW, FORSCHUNGSZENTRUM TELEKOMMUNIKATION WIEN, AT, Nr. FTW-TR-2009-003, 17. April 2009 (2009-04-17), Seiten 1-51, XP007913770,
- BAIK HOH ET AL: "Enhancing Privacy Preservation of Anonymous Location Sampling Techniques in Traffic Monitoring Systems", SECURECOMM AND WORKSHOPS, 2006, IEEE, PI, 1. August 2006 (2006-08-01), Seiten 1-3, XP031087485, ISBN: 978-1-4244-0422-3

## Beschreibung

Die Erfindung betrifft ein Verfahren und eine Anordnung zur Datenschutz-gerechten Aufbereitung von Mobilfunkdaten für die Erzeugung von Verkehrsprognosen gemäß Anspruch 1 bzw. 7.

Unter Floating-Car-Daten (FCD) werden aus Fahrzeugen heraus generierte Daten verstanden, die zur Erstellung von Verkehrsprognosen insbesondere für Autobahnen und andere Straßen verwendet werden. FCD umfassen wenigstens einen Zeitstempel und aktuelle Ortsdaten. Moderne FCD-Ansätze basieren vor allem auf Mobilfunknetz-Daten.

Die europäische Patentanmeldung EP2242031A2 beschreibt einen Ansatz zur Nutzung von Mobilfunknetz-Daten für ein FCD-Verfahren, bei dem bestimmte, bei der Anmeldung eines mobilen Kommunikationsendgerätes eines Kunden eines Mobilfunknetzbetreibers bei einer Vermittlungsstelle erfasste Daten zur Erstellung von Verkehrsprognosen genutzt werden. Die erfassten Daten umfassen hierbei zumindest eine auf die Person des Kunden bezogene numerische Kennung wie die IMSI (International Mobile Subscriber Identity) oder die MSISDN (Mobile Subscriber Integrated Services Digital Network Number) sowie Zeitpunkt und Ort der Anmeldung bei der Vermittlungsstelle.

Um sicherzustellen, dass aus der Kennung gar nicht oder zumindest nicht ohne erheblichen Aufwand auf die Identität des Kunden geschlossen werden kann, wird in der EP2242031A2 vorgeschlagen, die Kennung zumindest partiell als Argument einer echten oder unechten Einwegfunktion zur Berechnung eines Funktionswertes zu verwenden, den Funktionswert den zu nutzenden Daten, insbesondere dem Zeitpunkt und Ort der Anmeldung, zuzuordnen und die zu nutzenden Daten einschließlich des Funktionswertes jedoch ohne die Kennung an eine die Daten nutzende Einheit zu übermitteln.

Obwohl damit der Rückschluss auf die Identität von Kunden erschwert oder gar verhindert wird, verwendet dieses aus der EP2242031A2 bekannte Verfahren aus Sicht des Datenschutzes sensible Parameter wie die IMSI oder die MSISDN und greift auf Teilnehmerprofile zurück, die bestimmen, inwieweit Daten für FCD verwendet oder nicht verwendet werden dürfen. Daher wird zumindest in Teilen dieses Verfahrens mit konkret auf Kunden bezogenen Daten gearbeitet, und erst in späteren Verfahrensschritten eine Anonymisierung durch die Verwendung der Einwegfunktion vorgenommen.

Wenn dieses Verfahren zudem mit Teilnehmerprofilen arbeitet, sind bestimmte Teilnehmer(kreise) von der Datenweitergabe für die Erzeugung von FCD auszuschließen. Dadurch wird jedoch die für die Erzeugung von FCD verfügbare Datenmenge und damit die Grundgesamtheit der für die FCD-Erzeugung verwendeten Stichprobe reduziert, wodurch Verkehrsprognosen unpräziser und weniger zeitnah werden können.

Die Veröffentlichung BAIK HOH ET AL: "Enhancing Privacy Preservation of Anonymous Location Sampling Techniques in Traffic Monitoring Systems", SECURECOMM AND WORKSHOPS, 2006, IEEE, PI, 1. August 2006 (2006-08-01), Seiten 1-3, XP031087485, ISBN: 978-1-4244-0422-3, befasst sich allgemein mit der Verbesserung des Datenschutzes in Verkehrsüberwach ungssystemen.

Die US2010/285772A1 beschreibt ein Verfahren zum Schätzen von Verkehrsstaus auf einem Straßennetz, bei dem Daten, die auf das Rufaufkommen in wenigstens einem öffentlichen Mobiltelefonnetz, das eine geographische Region mit dem Straßennetz abdeckt, empfangen und für das Schätzen ausgewertet werden.

Die US2005/227696A1 beschreibt ein System und ein Verfahren zum kontinuierlichen Extrahieren von Daten zum Verkehrsaufkommen und zur Verkehrsgeschwindigkeit auf Straßen innerhalb des Abdeckungsbereichs eines zellularen Netzwerks. Die Daten werden direkt aus der Kommunikation im zellularen Netzwerk ohne externe Sensoren extrahiert.

Die EP1501321A2 beschreibt ein Verfahren und System zum Erzeugen von Informationsdaten auf der Basis von in einem zellularen Kommunikationsnetz erzeugten spezifischen Daten mobiler Endeinrichtungen, wobei spezifische Daten wenigstens einer mobilen Endeinrichtung erfasst und in einer zentralen Rechnereinheit elektronisch bearbeitet werden und wobei Informationsdaten bezüglich wenigstens einer Zelle des Kommunikationsnetzes erzeugt werden.

Die Veröffentlichung DANILO VALERIO: "Road Traffic Information from Cellular Network Signaling", TECHNICAL REPORT FTW, FORSCHUNGSZENTRUM TELEKOMMUNIKATION WIEN, AT, Nr. FTW-TR-2009-003, 17. April 2009 (2009-04-17), Seiten 1-51, XP007913770, beschreibt ein Monitoring Framework, bei dem die mittels einer Einwegfunktion anonymisierte IMSI (siehe Kapitel 4.3 und Kapitel 7, Nr. 1) abgegriffen wird. Genau wie bei der EP2242031A2 wird daher bei diesem Framework zumindest teilweise mit konkret auf Kunden bezogenen Daten gearbeitet.

Aufgabe der vorliegenden Erfindung ist es nun, eine Datenschutz-gerechte Aufbereitung von Mobilfunkdaten für die Erzeugung von Verkehrsprognosen zu schaffen, die ohne Verwendung von aus Sicht des Datenschutzes sensiblen Parametern wie der IMSI oder der MSISDN auskommt.

Diese Aufgabe wird durch ein Verfahren und eine Anordnung zur Datenschutz-gerechten Aufbereitung von Mobilfunkdaten für die Erzeugung von Verkehrsprognosen mit den Merkmalen von Anspruch 1 bzw. 7 gelöst. Weitere Ausgestaltungen der Erfindung ergeben sich aus den abhängigen Ansprüchen.

Ein der Erfindung zugrunde liegender Gedanke besteht nun darin, dass Netz-übergreifend Signalisierungsdaten in einem Mobilfunknetz abgegriffen und daraus für die Erstellung von Verkehrsprognosen geeignete Datensätze erzeugt werden. Der Vorteil des Netz-übergreifenden Abgriffs von Signalisierungsdaten besteht darin, dass nicht mit der IMSI oder der MSISDN gearbeitet werden muss, die es ermöglichen, Mobilfunkteilnehmer zu identifizieren. Stattdessen ermöglicht es die Erfindung, mit pseudonymen oder anonymen Parametern zu arbeiten, die keinen Rückschluss auf Mobilfunkteilnehmer ermöglichen und daher aus Datenschutz-rechtlicher Sicht bei der Verarbeitung von Datensätzen für die Erzeugung von Verkehrsprognosen unproblematischer als die Parameter IMSI und MSISDN sind. Bei der vorliegenden Erfindung sind auch keine Teilnehmerprofile zur Erstellung von Verkehrsprognosen erforderlich, da mit anonymen bzw. pseudonymen Parametern gearbeitet wird und daher kein Rückschluss auf Mobilfunkteilnehmer möglich ist. Außerdem können Daten für die Erstellung von Verkehrsprognosen von allen Mobilfunkendgeräten erzeugt werden, die in ein insbesondere zellulares Mobilfunknetz eingebucht sind. Dadurch können beispielsweise Mobilfunknetzbetreiber Daten für Dritte, beispielsweise Navigationsdienstanbieter zum Erzeugen von Verkehrsprognosen wie Staus zur Verfügung stellen, ohne auf aus Datenschutz-Sicht bedenklichen Parametern wie IMSI oder MSISDN zurückgreifen zu müssen. Durch die Auswertung von Signalisierungsdaten im Mobilfunknetz fallen zudem aufgrund der Vielzahl von Mobilfunkteilnehmern, die alle relevante Signalisierungsdaten liefern, große Datenmengen an, die es ermöglichen, relativ genaue und zeitnahe Verkehrsprognosen zu erstellen.

Eine Ausführungsform der Erfindung betrifft nun ein Verfahren zur Datenschutz-gerechten Aufbereitung von Mobilfunkdaten für die Erzeugung von Verkehrsprognosen mit den folgenden Schritten:
Abgreifen von Signalisierungsdaten an verteilt in einem Mobilfunknetz angeordneten Abgreifpunkten, und
Verarbeiten der abgegriffenen Signalisierungsdaten zum Erzeugen von Datensätzen für die Erzeugung von Verkehrsprognosen.
Das Abgreifen von Signalisierungsdaten kann kontinuierlich erfolgen, um fortlaufend Daten für die Erstellung von aktuellen Verkehrsprognosen zu sammeln. Denkbar ist jedoch auch ein Abgreifen von Daten zu bestimmten Zeitpunkten, um "Schnappschüsse" von Daten zu erstellen, wodurch die anfallende Datenmenge reduziert werden kann.

Als Signalisierungsdaten können insbesondere von Mobilfunkendgeräten im Mobilfunknetz erzeugte Call-Daten, Handover-Daten, und/oder Location-Update-Daten abgegriffen werden. Call-Daten weisen insbesondere Gesprächsbeginn und -ende einer Kommunikationsverbindung eines Mobilfunkendgeräts sowie den Aufenthaltsort des Mobilfunkendgeräts im Netz auf. Während Anrufen kann es zu Zell-Handovers kommen, d.h. die jeweilige Mobilfunknetz-Zelle wird bei einer Kommunikationsverbindung eines Mobilfunkendgeräts beispielsweise während einer Autofahrt gewechselt und die neue Zelle ist als Information vorhanden. Während Inaktivität - also z.B. kein Anruf, keine Kurzmitteilung etc. - können Location Update-Daten als Signalisierungsdaten gewonnen werden, d.h. die Änderung der Location Area (ein wesentlich größeres Gebiet gegenüber den Abmessungen einer Zelle) kann nachvollzogen werden.

Das Verarbeiten der abgegriffenen Signalisierungsdaten zum Erzeugen von Datensätzen kann das Aufnehmen von den Signalisierungsdaten zugeordneten pseudonymen Parametern, insbesondere TMSI (Temporary Mobile Subscriber Identity), und/oder Anrufe kennzeichnende Identifikationsnummern in die Datensätze aufweisen. Diese Daten können vor allem der Verknüpfung von Einzeldatensätzen zu sogenannten Spuren über längere Zeiträume hinweg dienen.

Das Verarbeiten der abgegriffenen Signalisierungsdaten kann auch das Anwenden einer Einwegfunktion unter Einbeziehung eines Salt-Wertes auf pseudonyme Parameter und Anrufe kennzeichnende Identifikationsnummern aufweisen. Hierdurch werden die Rückverfolgung der pseudonymen Parameter und Anrufe kennzeichnende Identifikationsnummern zusätzlich erschwert. Unter einer Einwegfunktion wird im Sinne der vorliegenden Erfindung eine mathematische Vorschrift verstanden, die in der einen Richtung "leicht" berechenbar ist. Für den Versuch den Ursprungswert zurückzurechnen ist dagegen ein unverhältnismäßig hoher Aufwand erforderlich - bedingt je nach Stärke des der verwendeten Einwegfunktion zugrunde liegenden Algorithmus und "Rechenpower" auch hunderte bis tausende Jahre Rechenaufwand bzw. den Einsatz von mehreren Millionen Euro.

Ferner kann das Verarbeiten der abgegriffenen Signalisierungsdaten das Wechseln und Überschreiben - Spurkappen - von Schlüsseln der Einwegfunktion nach einer einstellbaren Zeit aufweisen, um die Möglichkeit zur Erstellung von Bewegungsprofilen verhindern zu können. Beispielsweise kann eingestellt werden, alle 5 Minuten eine Spurkappung durchzuführen, so dass sich nur über einen Zeitraum von 5 Minuten Bewegungsprofile von Mobilfunkendgeräten erstellen lassen.

Das Verarbeiten der abgegriffenen Signalisierungsdaten kann weiterhin das Zuordnen jedes Datensatzes zu einer bestimmten Kappungsgruppe aufweisen, wobei jeder Kappungsgruppe eine jeweils eine andere Zeit zum Spurkappen zugeordnet wird. Da durch das Spurkappen von allen Datensätzen zum selben Zeitpunkt die Datengüte reduziert wird, kann durch eine Aufteilung von Datensätzen in Kappungsgruppen diese Reduktion der Datengüte abgeschwächt werden. Durch die Kappungsgruppen werden nicht alle Datensätze zur selben Zeit gekappt, sondern nur die Datensätze einzelner Kappungsgruppen, wodurch die Datengüte nur durch die Kappung einer einzelnen Kappungsgruppe verringert wird.

Das Zuweisen jedes Datensatzes zu einer bestimmten Kappungsgruppe kann folgende Schritte aufweisen:
Extrahieren einer oder mehrerer Stellen einer in einem Datensatz enthaltenen IMEI (International Mobile Equipment Identity) oder IMEISV (IMEI Software Version) und
Zuordnen von Datensätzen mit den gleichen extrahierten Stellen zu derselben Kappungsgruppe.
Dadurch kann sichergestellt werden, dass alle Signalisierungsdaten eines Mobilfunkendgeräts bzw. Teilnehmers in dieselbe Kappungsgruppe aufgenommen werden, also beispielsweise alle Call-, Handover- und Location-Update-Daten von einem Mobilfunkendgerät, das durch seine IMEI gekennzeichnet ist, in derselben Kappungsgruppe aufgenommen und damit auch zu einem bestimmten Zeitpunkt gekappt werden.

Die Anzahl verfügbarer Kappungsgruppen kann variabel sein und lastspezifisch dynamisch eingestellt werden. Beispielsweise kann bei vielen aktiven Mobilfunkendgeräten im Netz die Anzahl der Kappungsgruppen gegenüber einer Standardanzahl erhöht werden. Dagegen kann bei wenigen aktiven Mobilfunkendgeräten die Anzahl der Kappungsgruppen verringert werden, um die Datengüte so wenig wie möglich durch das Kappen zu reduzieren.

Die Erfindung betrifft in einer weiteren Ausführungsform eine Anordnung zur Datenschutz-gerechten Aufbereitung von Mobilfunkdaten für die Erzeugung von Verkehrsprognosen nach einem Verfahren gemäß der Erfindung und wie vorstehend erläutert mit
Probes zum Abgreifen von Signalisierungsdaten an verteilt in einem Mobilfunknetz angeordneten Abgreifpunkten, und
einer Vorrichtung zur Verarbeitung der abgegriffenen Signalisierungsdaten zum Erzeugen von Datensätzen für die Erzeugung von Verkehrsprognosen.

Die Vorrichtung zur Verarbeitung der abgegriffenen Signalisierungsdaten kann folgendes aufweisen:
eine Datenvorverarbeitung zum Erzeugen von Datensätzen zur Erzeugung von Verkehrsprognosen aus den abgegriffenen Signalisierungsdaten, und
eine Datenmediationsvorrichtung zur Pseudonymisierung und/oder Kappung der Datensätze.
Sowohl die Datenvorverarbeitung als auch die Datenmediationsvorrichtung können beispielsweise durch speziell konfigurierte Computer implementiert sein, insbesondere Computer, die durch eine spezielle Software derart konfiguriert sind, dass sie Verfahrensschritte des erfindungsgemäßen Verfahrens wie hierin beschrieben ausführen können.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 ein Ausführungsbeispiel einer Anordnung zur Datenschutz-gerechten Aufbereitung von Mobilfunkdaten für die Erzeugung von Verkehrsprognosen gemäß der Erfindung; und
Fig. 2 ein Schema zum Erläutern des Vorgangs des Kappens nach Kappungsgruppen gemäß der Erfindung.

Im Folgenden können gleiche und/oder funktional gleiche Elemente mit den gleichen Bezugszeichen versehen sein. Das erfindungsgemäße Verfahren zur Datenschutz-gerechten Aufbereitung von Mobilfunkdaten für die Erzeugung von Verkehrsprognosen wird im Folgenden auch kurz als NetFCD-Verfahren bezeichnet.

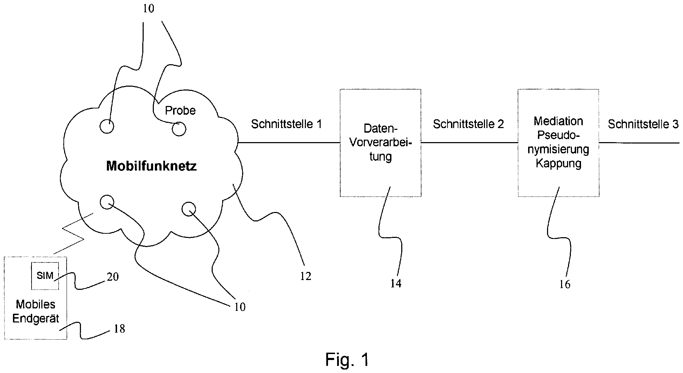

In Fig. 1 ist ein zellulares Mobilfunknetz 12 gezeigt, in dem Netz-übergreifend Signalisierungsdaten von mobilen Endgeräten 18 mit SIM (Subscriber Identification Module)-Karte 20 abgegriffen werden. Die mobilen Endgeräte 18 bzw. Mobilfunkendgeräte können beispielsweise Mobiltelefone oder mobile Datenendgeräte (Mobilfunk-fähige Computer) sein.

Beim ersten Einbuchen der mobilen Endgeräte 18 wird die auf der im Endgerät 18 eingelegten SIM-Karte 20 gespeicherte IMSI in das Mobilfunknetz 12 übertragen. Anstelle der IMSI wird dann für nachfolgende Signalisierungen eine zufällig erzeugte und einem mobilen Endgerät 18 zugeordnete TMSI benutzt, um das mobile Endgerät 18 zu identifizieren. Die TMSI lässt im Gegensatz zur IMSI keine direkten Rückschlüsse auf den Benutzer des mobilen Endgeräts 18 zu.

Die Abgreifpunkte sind im Mobilfunknetz 12 über verteilte Probes 10 realisiert, die kontinuierlich (Signalisierungs-)Daten von eingebuchten mobilen Endgeräten 18 sammeln, an die jeweils eine TMSI vergeben ist. Die Probes 10 können an allen System-Einheiten des Mobilfunknetzes 12, in denen Signalisierungsdaten von mobilen Endgeräten 18 anfallen, vorgesehen sein, beispielsweise an einer BTS (Base Transceiver Station), einem BSC (Base Station Controller) oder einem MSC (Mobile Switching Center) oder MSS (Mobile Switching Server) des Mobilfunknetzes 12.

Die Probes 10 erfassen als Signalisierungsdaten insbesondere die folgenden Daten (wenn auch nicht unbedingt die einzig denkbaren für das NetFCD-Verfahren): Call-Daten, Handover-Daten und Location Update-Daten, die von den mobilen Endgeräten 18 im Mobilfunknetz 12 erzeugt werden.

Bei Call-Daten sind u.a. Gesprächsbeginn und -ende sowie der Aufenthaltsort im Netz von Bedeutung und werden daher von den Probes 10 erfasst. Der Aufenthaltsort eines im Mobilfunknetz 12 eingebuchten mobilen Endgeräts 18 kann beispielsweise über das HLR (Home Location Register) oder VLR (Visitor Location Register) anhand der TMSI des mobilen Endgeräts 18 von den Probes 10 ermittelt werden.

Zudem kommt es während Anrufen oftmals zu Zell-Handovers (HO), d.h. die jeweilige Zelle des Mobilfunknetzes 12 wird gewechselt und die neue Zelle ist als Information vorhanden. Bei einem HO verlässt ein mobiles Endgerät 18 den Bereich einer Zelle und tritt in den Bereich einer anderen Zelle ein. Die Signalisierung und entsprechenden Signalisierungsdaten im Rahmen eines solchen HO werden von den Probes 10 erfasst.

Während Inaktivität - also z.B. wenn kein Anruf erfolgt und keine Kurzmitteilung gesendet oder empfangen wird - können Location Update-Daten von mobilen Endgeräten 18 im Mobilfunknetz 12 von den Probes 10 erfasst werden, d.h. die Änderung der Location Area (die ein wesentlich größeres Gebiet gegenüber den Abmessungen einer Zelle umfasst) kann von den Probes 10 nachvollzogen werden.

Für jede der oben beschriebenen und erfassten Signalisierungsdaten wird von einer Datenvorverarbeitung 14, die über eine erste Schnittstelle 1 mit den Probes 10 verbunden ist und von diesen die abgegriffenen Signalisierungsdaten empfängt, ein Datensatz erstellt, der Signalisierungsdaten jeweils eines bestimmten mobilen Endgeräts 18 enthält. Beispielsweise kann von der Datenvorverarbeitung 14
- ein Datensatz mit dem Anfangs- und Endzeitpunkt eines Gesprächs bzw. einer Kommunikationsverbindung eines mobilen Endgeräts 18 und dem aktuellen Aufenthaltsort des Geräts 18 (z.B. Identifikation der Zelle, in die das Gerät eingebucht ist),
- ein Datensatz mit Signalisierungsdaten zu einem HO wie beispielsweise vorherige Zelle und aktuelle Zelle, und
- ein Datensatz mit Signalisierungsdaten zu einem Location Update eines mobilen Endgeräts 18
erstellt werden.

Des Weiteren werden von der Datenvorverarbeitung 14 die pseudonymen Parameter TMSI und eine einen bestimmten Anruf kennzeichnende Identifikationsnummer (nicht personenbeziehbar) in die Datensätze mit den erfassten Signalisierungsdaten geschrieben, so dass jeder Datensatz einem bestimmten mobilen Endgerät 18 zuordenbar ist. Außerdem wird die IMEI bzw. IMEISV des jeweiligen mobilen Endgeräts in die Datensätze integriert. Die das jeweilige Endgerät identifizierende Daten dienen der Verknüpfung von Einzeldatensätzen zu sogenannten Spuren über längere Zeiträume hinweg. Wichtig ist hierbei im Rahmen des erfindungsgemäßen Verfahrens das Arbeiten mit temporären bzw. pseudonymen/anonymen Parametern, die nicht direkt auf einen realen Kunden zurückführbar sind. Es wird insbesondere keine IMSI oder MSISDN genutzt.

Eine Datenmediationsvorrichtung 16 sorgt für die Datenzusammenführung und -konvertierung und gewährleistet die Anwendung erweiterter Datenschutzverfahren durch Pseudonymisierung. Zur Pseudonymisierung der Daten wird auf Parameter wie TMSI und die die Anrufe kennzeichnende ID eine Einwegfunktion unter Einbezug eines Salt-Wertes angewandt, beispielsweise eine kryptographische Hash-Funktion, die den Salt-Wert, TMSI und die Anruf-ID als Eingabeschlüssel (Hashkeys) erhält.

Die von der Datenmediationsvorrichtung 16 durchgeführte Mediation sorgt zusätzlich - um die Möglichkeit zur Erstellung von Bewegungsprofilen verhindern zu können - für eine "Spurkappung", d.h. den Wechsel und das Überschreiben der Schlüssel der Einwegfunktion (Hashkeys) nach einer gewissen, einstellbaren Zeit, um die Zuordnung der Werte nach der Kappung zu den Vorhergehenden zu unterbinden.

Die für das Verfahren eingesetzte Spurkappung würde gezwungenermaßen eine starke Minderung der Datengüte der NetFCD-Daten bedingen, wenn diese netzweit zum selben Zeitpunkt auf alle Daten angewandt würde. Daher kennzeichnet das Verfahren eine weitere Verarbeitungslogik der ständigen Aufteilung der im Mobilfunknetz gewonnenen Daten auf sogenannte Kappungsgruppen, die jeweils zu bestimmten Zeitpunkten eine Spurkappung der enthaltenen Datensätze durchführen. Hierdurch werden nicht netzweit alle Datensätze zum selben Zeitpunkt gekappt, wodurch die Datengüte nicht so stark reduziert wird.

In der Datenmediationsvorrichtung 16 wird hierzu für jeden Datensatz zu jedem Verarbeitungszeitpunkt eine Datenzuweisung auf eine bestimmte Kappungsgruppe durchgeführt. Für die richtige Datenzuweisung wird eine Stelle der IMEI/IMEISV eingesetzt, die in den Datensätzen vorhanden ist, wobei unter einer richtigen Datenzuweisung bzw. Zuordnung von Datensätzen zu Kappungsgruppen verstanden wird, dass alle Daten eines Teilnehmers stets derselben Kappungsgruppe zugeordnet werden.

In der Datenmediationsvorrichtung 16 ist für jede Kappungsgruppe ein eigener Kappungszeitpunkt vorgegeben. Die Kappungszeitpunkte können hierbei so gewählt sein, dass sie sich mehrere oder gar alle unterscheiden. Im Extremfall gibt es ebenso viele Kappungszeitpunkte wie Kappungsgruppen, d.h. bei zehn Kappungsgruppen sind auch zehn, zeitlich versetzte Kappungszeitpunkte vorgegeben. Die Anzahl der Kappungsgruppen ist variabel und kann z.B. lastgesteuert dynamisch oder abhängig von der erforderlichen Datengüte eingestellt werden.

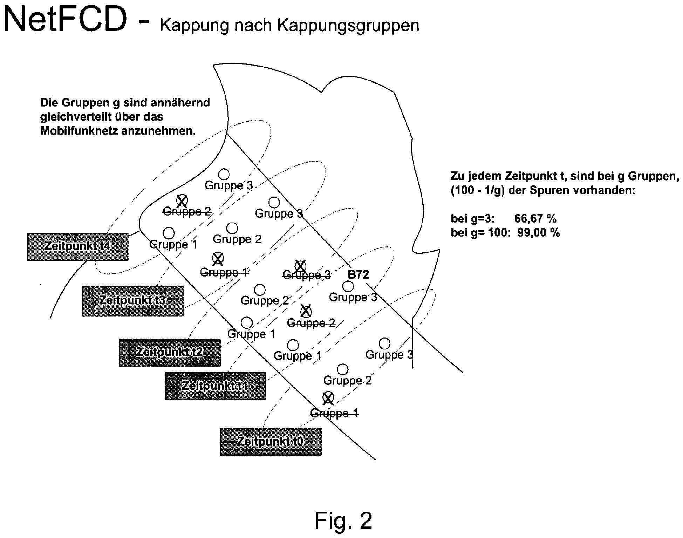

Anhand von Fig. 2 wird nun die Anwendung dieser Kappungsgruppen-Systematik erläutert. In Fig. 2 ist die Straße B72 und verschiedene (Kappungs-)Gruppen 1-3, die annähernd über das Mobilfunknetz gleichverteilt sind, dargestellt. Wie in Fig. 2 dargestellt, bewegen sich die Mobilfunkteilnehmer der Gruppen 1-3 auf der Straße B72 und befinden sich zu unterschiedlichen Zeitpunkten an unterschiedlichen Stellen der Straße. Um die Erstellung von Bewegungsprofilen zu verhindern, werden nun zu vorgegebenen unterschiedlichen Kappungszeitpunkten t0-t4 jeweils einzelne Gruppen gekappt, wie oben beschrieben. Die Gruppe 1 wird beispielsweise zu den Zeitpunkten t0 und t3 gekappt, so dass kein vollständiges Bewegungsprofil dieser Gruppe auf der Straße B72 anhand der Datensätze erstellt werden kann. Analog werden die Gruppe 2 zu den Zeitpunkten t1 und t4 und die Gruppe 3 zum Zeitpunkt t2 gekappt.. Zu einem bestimmten Zeitpunkt t1-t4 sind daher bei g Gruppen (1 - 1/g) der Spuren vorhanden - also wie in Fig. 2 gezeigt bei 3 Gruppen 66,67% und beispielsweise bei 100 Gruppen 99% aller Spuren. Da für die Gruppenbildung ein von der Geographie unabhängiger Parameter benutzt wird, beeinflusst die Kappung die NetFCD-Berechnungen - d.h. Spurerstellung - vergleichsweise weniger, als im Fall einer netzweiten Kappungslogik.

Das gesamte hier vorgestellte erfindungsgemäße Verfahren ist für eine schnelle, verzögerungsfreie Datenweitergabe und eine hohe Performance konzeptioniert. Damit wird ein präziser und zeitnaher Dienst für Kunden gewährleistet.

Das erfindungsgemäße Verfahren nutzt auch Informationen über die Netzinfrastruktur des Mobilfunknetzes, die die Zuordnung der Signalisierungsdaten auf das zugrundeliegende Netz ermöglichen.

Für die Weiterverarbeitung der durch das erfindungsgemäße Verfahren Datenschutz-gerecht aufbereiteten Mobilfunkdaten bestehen grundsätzlich vielfältige Möglichkeiten, die aufbereiteten Daten weiterzuverarbeiten. Beispielsweise können diese Daten von Partnerfirmen zur Berechnung von Verkehrsprognosen verwendet werden. Zudem sind auch Mobilfunknetzbetreiber-eigene Dienste oder Dienste anderer Art denkbar, die diese Daten als Basis nutzen, um FCD-Dienste o.Ä. anzubieten.

### Bezugszeichen und Abkürzungen

- 10: Abgreifpunkte/Probes für Signalisierungsdaten
- 12: Mobilfunknetz
- 14: Datenvorverarbeitung
- 16: Datenmediationsvorrichtung
- 18: mobiles Endgerät/Mobilfunkendgerät
- 20: SIM-Karte
- BSC: Base Station Controller
- BTS: Base Transceiver Station
- FCD: Floating-Car-Daten
- GMSC: Gateway MSC
- HLR: Home Location Register
- HO: Handover
- IMEI: International Mobile Equipment Identity
- IMEISV: IMEI Software Version
- IMSI: International Mobile Subscriber Identity
- MSC: Mobile Switching Center
- MSISDN: Mobile Subscriber Integrated Services Digital Network Number
- MSS: MSC Server
- SIM: Subscriber Identification Module
- TMSI: Temporary Mobile Subscriber Identity
- VLR: Visitor Location Register

## Patentansprüche

1. Verfahren zur Datenschutz-gerechten Aufbereitung von Mobilfunkdaten für die Erzeugung von Verkehrsprognosen mit den folgenden Schritten:
- Abgreifen von Signalisierungsdaten an verteilt in einem Mobilfunknetz (12) angeordneten Abgreifpunkten (10), und
- Verarbeiten der abgegriffenen Signalisierungsdaten zum Erzeugen von Datensätzen für die Erzeugung von Verkehrsprognosen, wobei das Verarbeiten folgendes aufweist:
- Aufnehmen von den Signalisierungsdaten zugeordneten pseudonymen Parametern und/oder Anrufe kennzeichnende Identifikationsnummern in die Datensätze,
- Anwenden einer Einwegfunktion unter Einbeziehung eines Salt-Wertes auf pseudonyme Parameter und Anrufe kennzeichnende Identifikationsnummern, und
- Wechseln und Überschreiben - Spurkappen - von Schlüsseln der Einwegfunktion nach einer einstellbaren Zeit.

2. Verfahren nach Anspruch 1,
**dadurch gekennzeichnet, dass**
als Signalisierungsdaten von Mobilfunkendgeräten im Mobilfunknetz erzeugte Call-Daten, Handover-Daten, und/oder Location-Update-Daten abgegriffen werden.

3. Verfahren nach Anspruch 1 oder 2,
**dadurch gekennzeichnet, dass**
die den Signalisierungsdaten zugeordneten pseudonymen Parameter TMSI aufweisen.

4. Verfahren nach Anspruch 1, 2 oder 3,
**dadurch gekennzeichnet, dass**
das Verarbeiten der abgegriffenen Signalisierungsdaten weiterhin das Zuordnen jedes Datensatzes zu einer bestimmten Kappungsgruppe aufweist, wobei jeder Kappungsgruppe eine jeweils eine andere Zeit zum Spurkappen zugeordnet wird.

5. Verfahren nach Anspruch 4,
**dadurch gekennzeichnet, dass**
das Zuweisen jedes Datensatzes zu einer bestimmten Kappungsgruppe folgende Schritte aufweist:
- Extrahieren einer oder mehrerer Stellen einer in einem Datensatz enthaltenen IMEI oder IMEISV und
- Zuordnen von Datensätzen mit den gleichen extrahierten Stellen zu derselben Kappungsgruppe.

6. Verfahren nach Anspruch 4 oder 5,
**dadurch gekennzeichnet, dass**
die Anzahl verfügbarer Kappungsgruppen variabel ist und lastspezifisch dynamisch eingestellt wird.

7. Anordnung zur Datenschutz-gerechten Aufbereitung von Mobilfunkdaten für die Erzeugung von Verkehrsprognosen nach einem Verfahren gemäß den vorhergehenden Ansprüchen mit
- Probes (10) zum Abgreifen von Signalisierungsdaten an verteilt in einem Mobilfunknetz (12) angeordneten Abgreifpunkten, und
- einer Vorrichtung (14, 16) zur Verarbeitung der abgegriffenen Signalisierungsdaten zum Erzeugen von Datensätzen für die Erzeugung von Verkehrsprognosen, wobei die Vorrichtung ausgebildet ist zum
- Aufnehmen von den Signalisierungsdaten zugeordneten pseudonymen Parametern und/oder Anrufe kennzeichnende Identifikationsnummern in die Datensätze,
- Anwenden einer Einwegfunktion unter Einbeziehung eines Salt-Wertes auf pseudonyme Parameter und Anrufe kennzeichnende Identifikationsnummern, und
- Wechseln und Überschreiben - Spurkappen - von Schlüsseln der Einwegfunktion nach einer einstellbaren Zeit.

8. Anordnung nach Anspruch 7,
**dadurch gekennzeichnet, dass**
die Vorrichtung zur Verarbeitung der abgegriffenen Signalisierungsdaten folgendes aufweist:
- eine Datenvorverarbeitung (14) zum Erzeugen von Datensätzen für die Erzeugung von Verkehrsprognosen aus den abgegriffenen Signalisierungsdaten, und
- eine Datenmediationsvorrichtung (16) zur Pseudonymisierung und/oder Kappung der Datensätze.

## Claims

1. Method for the data privacy compliant processing of mobile radio data for generating traffic forecasts with the following steps:
- tapping of signaling data at tap points (10) being distributed arranged in a mobile radio network (12), and
- processing the tapped signaling data to generate data sets for generating traffic forecasts, said processing comprising the following:
- including pseudonymous parameters being assigned to the signaling data and/or of identification numbers identifying calls in the data sets,
- applying a one-way function including a salt value to pseudonymous parameters and identification numbers identifying calls, and
- changing and overwriting - track capping - of keys of the one-way function after an adjustable time.

2. Method according to claim 1,
**characterized in that**
call data, handover data and/or location update data generated in the mobile network are tapped as signaling data from mobile terminals in the mobile network.

3. Method according to claim 1 or 2,
**characterized in that**
the pseudonymous parameters assigned to the signaling data comprise TMSI.

4. Method according to claim 1, 2 or 3,
**characterized in that**
the processing of the tapped signaling data further comprises the assigning of each data set to a specific capping group, wherein another time for the track capping is assigned to each capping group, respectively.

5. Method according to claim 4,
**characterized in that**
the assignment of each data set to a specific capping group comprises the following steps:
- extracting one or more digits of an IMEI or IMEISV contained in a data set, and
- assigning data records with the same extracted digits to the same capping group.

6. Method according to claim 4 or 5,
**characterized in that**
the number of available capping groups is variable and is set dynamically according to the load.

7. Arrangement for the data privacy compliant processing of mobile radio data for the generation of traffic forecasts according to a method in accordance with the previous claims with
- probes (10) for tapping signaling data at tap points distributed arranged in a mobile radio network (12), and
- a device (14,16) for processing the tapped signaling data to generate data sets for generating traffic forecasts, said device being adapted to the
- including of pseudonymous parameters being assigned to the signaling data and/or of identification numbers identifying calls in the data sets,
- applying a one-way function including a salt value to pseudonymous parameters and identification numbers identifying calls, and
- changing and overwriting - track capping - of keys of the one-way function after an adjustable time.

8. Arrangement according to claim 7,
**characterized in that**
the device for processing the tapped signaling data comprises the following:
- a data preprocessing (14) for generating data sets for generating traffic forecasts from the tapped signaling data, and
- a data mediation device (16) for pseudonymizing and/or capping the data sets.

## Revendications

1. Méthode pour le traitement de données radio mobiles en accord avec la protection des données pour générer des prévisions de trafic avec les étapes suivantes:
- capter de données de signalisation à des points de commutation (10) répartis dans un réseau de radiocommunications mobiles (12), et
- traiter des données de signalisation captées pour générer des ensembles de données pour générer des prévisions de trafic, ledit traitement comprenant les éléments suivants:
- intégrer paramètres pseudonymes attribués aux données de signalisation et/ou numéros d'identification identifiant les appels dans les ensembles de données,
- appliquer d'une fonction unidirectionnelle incluant une valeur saline aux paramètres pseudonymes et aux numéros d'identification identifiant les appels, et
- alterner et écraser - couper la trace - des touches de la fonction unidirectionnelle après un temps réglable.

2. Méthode selon la revendication 1,
**caractérisé en ce que**
les données d'appel, les données de transfert et/ou les données de localisation actualiser générées à partir des terminaux mobiles dans le réseau mobile sont capter comme données de signalisation du réseau.

3. Méthode selon la revendication 1 ou 2,
**caractérisé en ce que**
les paramètres pseudonymes affectés aux données de signalisation comprennent TMSI.

4. Méthode selon la revendication 1 ,2 ou 3,
**caractérisé en ce que**
le traitement des données de signalisation taraudées comprend en outre l'attribution de chaque ensemble de données à un groupe de couper spécifique, dans lequel un autre temps pour le couper de la voie est attribué à chaque groupe de couper, respectivement.

5. Méthode selon la revendication 4,
**caractérisé en ce que**
l'attribution de chaque ensemble de données à un groupe de couper spécifique comprend les étapes suivantes:
extraire un ou plusieurs chiffres d'un IMEI ou d'un IMEISV contenus dans un ensemble de données, et
assigner des ensembles de données avec les mêmes chiffres extraits au même groupe de couper.

6. Méthode selon la revendication 4 ou 5,
**caractérisé en ce que**
le nombre de groupes de couper disponibles est variable et se règle dynamiquement en fonction de la charge.

7. Arrangement pour le traitement de données radio mobiles en accord avec la protection des données pour générer des prévisions de trafic selon une méthode conforme aux revendications précédentes avec
- des sondes (10) pour capter de données de signalisation à des points de commutation répartis dans un réseau de radiocommunications mobiles (12), et
- un dispositif (14,16) pour traiter des données de signalisation captées pour générer des ensembles de données pour générer des prévisions de trafic, ledit dispositif étant adapté pour
- intégrer paramètres pseudonymes attribués aux données de signalisation et/ou numéros d'identification identifiant les appels dans les ensembles de données,
- appliquer d'une fonction unidirectionnelle incluant une valeur saline aux paramètres pseudonymes et aux numéros d'identification identifiant les appels, et
- alterner et écraser - couper la trace - des touches de la fonction unidirectionnelle après un temps réglable.

8. Arrangement selon la revendication 7,
**caractérisé en ce que**
le dispositif de traitement des données de signalisation taraudées comprend suivants:
- un prétraitement des données (14) pour la génération d'ensembles de données permettant de générer des prévisions de trafic à partir des données de signalisation captées, et
- un dispositif de médiation de données (16) pour la pseudonymisation et/ou le couper des ensembles de données.
